# EUROPEAN PATENT SPECIFICATION

(11) **EP 3 722 107 B1**
(45) Date of publication and mention of the grant of the patent: **08.03.2023**
(21) Application number: 18886684.2
(22) Date of filing: 27.11.2018
(51) Int. Cl.: B60C 11/03, B60C 11/12, B60C 11/13

(54) **TIRE**
REIFEN
PNEU

(30) Priority: 08.12.2017 JP 2017235972
(43) Date of publication of application: 14.10.2020
(73) Proprietor: Bridgestone Corporation, Tokyo 104-8340 (JP)
(72) Inventor: ISHIHARA, Nobuyuki, Tokyo 104-8340 (JP)
(74) Representative: Marks & Clerk LLP
(86) International application number: PCT/JP2018/043531
(87) International publication number: WO 2019/111756

(56) References cited:
- JP-A- H02 241 805
- JP-A- H06 171 312
- JP-A- 2010 125 977
- JP-A- 2010 254 252
- JP-A- 2010 254 253
- JP-A- 2011 240 889
- JP-A- 2013 107 555
- JP-A- 2013 107 555
- JP-A- 2013 249 014
- JP-A- 2013 249 014

## Description

### BACKGROUND OF THE INVENTION

### Field of the Invention

The present invention relates to a tire provided with blocks in a tread portion.

### Related Background of the Invention

A tread pattern is set depending on performance (on-ice performance) of the tire in the ice road surface in the tire used on an ice road surface, and various blocks are formed in the tread portion. About the shape of the block, a grounding area of the block is secured by enlarging a central portion in the tire circumferential direction of the block in the tire width direction. In addition, at the time of travelling on the ice road surface, water may be sometimes produced between the block and the ice road surface by friction between the block and the ice. The water easily remains in the central portion in the tire circumferential direction of the block in comparison with ends in the tire circumferential direction of the block. Therefore, a sipe(s) is formed in the central portion in the tire circumferential direction of the block along the tire width direction, and the water is removed by the sipe.

However, there is concern that grounding pressure to be applied to the block concentrates on an outer end of the central portion of the block when the sipe(s) is formed in the central portion in the tire circumferential direction of the block in this way. It is required to avoid concentration of the grounding pressure on the outer end(s) to suppress tipping of the block in the outer end more surely. In contrast, a pneumatic tire in which a sidewall between two sipes is made to be recessed in the block is known conventionally (refer to Patent Literature 1).

In the conventional tire described in Patent Literature 1, the concentration of the grounding pressure in the central portion in the tire circumferential direction of the block is suppressed. In addition, in the part between two sipes, deformation and chipping of the block (small block) are suppressed. However, with respect to the conventional pneumatic tire, in the central portion in the tire circumferential direction of the block, the grounding area decreases by an amount corresponding to the recessed part of the sidewall and two sipes become short. Corresponding to the length of sipe, the edge component extending in the tire width direction of the block decreases. From a view of improving chipping resistance performance of the block together with on-ice performance of the tire, there is room for further improvement. A tire that effectively suppresses uneven wear of a block portion is known from JP2013249014 A.

### Prior Art

### Patent Literature

Patent Literature 1: Japanese Patent Laid-Open No. 2008-149768

### SUMMARY OF THE INVENTION

### Problems to be Solved by Invention

The present invention has been made in view of the above-described conventional problems and an object thereof is to suppress the tipping of the block in the tread portion while improving the on-ice performance of the tire.

### Means for solving Problems

A tire according to the present invention is defined in claim 1. Preferred embodiments of such a tire are defined in the dependent claims.

### EFFECTS OF THE INVENTION

According to the present invention, the on-ice performance of the tire can be improved while the chipping of block is suppressed.

### BRIEF DESCRIPTION OF THE DRAWINGS

Fig. 1 is a plan view illustrating a tread pattern of a tire of the present embodiment;
Fig. 2 is a perspective view illustrating a block of the present embodiment;
Fig. 3 is a sectional view of the block of the present embodiment;
Fig. 4 is a sectional view illustrating the state when the block is grounded; and
Fig. 5 is a plan view illustrating a tread pattern of another embodiment;

### DESCRIPTION OF THE PREFERRED EMBODIMENTS

An embodiment of a tire of the present invention will be described by referring to the attached drawings.

The tire of the present embodiment is a pneumatic tire for a vehicle (a tire for a track and a bus and a tire for heavy load and a tire for automobile, for example) and is formed having a known structure by a general tire constituent member. Namely, the tire includes a pair of bead portions, a pair of side wall portions located outside in a tire radial direction of the pair of bead portions, a tread portion to be in contact with a road surface, and a pair of shoulder portions located between the tread portion and the pair of side wall portions. Furthermore, the tire includes a pair of bead cores, a carcass arranged between the pair of bead cores, a belt arranged on an outer periphery side of the carcass, and a tread rubber having a predetermined tread pattern.

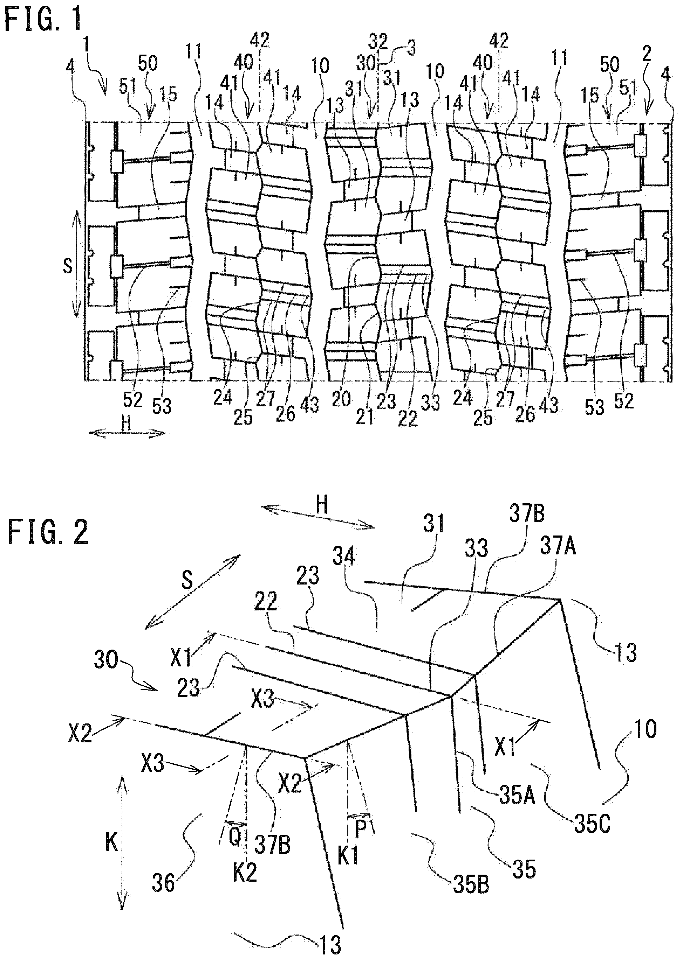

Fig. 1 is a plan view illustrating a tread pattern of a tire 1 of the present embodiment and schematically illustrates a part of a tread portion 2 in a tire circumferential direction S.

As illustrated, the tire 1 includes a plurality of circumferential grooves 10 and 11, a plurality of width direction grooves 13 to 15, a plurality of sipes 20 to 27, a plurality of land portions 30, 40, 50, and a plurality of blocks 31, 41, 51 in the tread portion 2. When the vehicle travels, the tire 1 rolls while contacting the road surface by the plurality of land portions 30, 40, and 50. The surfaces outward in the tire radial direction of the land portions 30, 40, and 50 are treads that come in contact with the road surface.

The plurality of circumferential grooves 10, 11 are main grooves extending along the tire circumferential direction S, and are arranged in parallel at intervals in the tire width direction H. Here, the tire 1 includes four circumferential grooves (two first circumferential grooves 10 and two second circumferential grooves 11) formed continuously in the tire circumferential direction S. The first circumferential groove 10 is an inner circumferential groove located on the innermost side (on the tire equatorial plane 3 side) in the tire width direction H among the plurality of circumferential grooves 10, 11. It is formed inner side in the tire width direction H of the second circumferential groove 11. The tire equatorial plane 3 is located at the center in the tire width direction H of the tread portion 2.

The first circumferential groove 10 is a central circumferential groove located on both sides in the tire width direction H of the tire equatorial plane 3, and is formed between the tire equatorial plane 3 and the second circumferential groove 11, on both sides of the tire equatorial plane 3. The second circumferential groove 11 is an outer circumferential groove located on the outermost side (on the side of the shoulder portion 4) in the tire width direction H among the plurality of circumferential grooves 10, 11, and is formed outside in the tire width direction H of the first circumferential groove 10. The shoulder portion 4 is located outside in the tire width direction H of the tread portion 2. On both sides of the tire equatorial plane 3, the second circumferential groove 11 is located inner side in the tire width direction H of the shoulder portion 4 and is formed between the first circumferential groove 10 and the shoulder portion 4.

The plurality of width direction grooves 13 to 15 are lateral grooves (lug grooves) extending along the tire width direction H, and are formed in the land portions 30, 40, 50. Further, the plurality of width direction grooves 13 to 15 are formed in a direction crossing the circumferential grooves 10, 11 and intersect with the circumferential grooves 10, 11. The width direction grooves 13 to 15 are formed shallower than the circumferential grooves 10 and 11, and groove bottoms of the width direction grooves 13 to 15 are positioned outside of the groove bottoms of the circumferential grooves 10 and 11 in the tire radial direction. The plurality of sipes 20 to 27 are cuts formed in the land portions 30, 40, 50, and are formed from the treads of the land portions 30, 40, 50 toward the interior of the land portions 30, 40, 50.

The tread portion 2 is partitioned in the tire width direction H by the plurality of circumferential grooves 10, 11, and the plurality of land portions 30, 40, 50 are formed in the tread portion 2. The plurality of land portions 30, 40, 50 are convex portions formed outward in the tire radial direction, and extend in the tire circumferential direction S along the circumferential grooves 10, 11. The land portions 30, 40, and 50 are block rows having the plurality of blocks 31, 41, and 51 arranged in the tire circumferential direction S, and are arranged in parallel at intervals in the tire width direction H.

The tire 1 includes five land portions (one first land portion 30, two second land portions 40, and two third land portions 50). The first land portion 30 is a central land portion formed between the two first circumferential grooves 10 and is formed in a central region of the tread portion 2 including the tire equatorial plane 3. The tire equatorial plane 3 is located at the center in the tire width direction H of the first land portion 30. The first land portion 30 is located inward in the tire width direction H of the two second land portions 40.

The first land portion 30 has the plurality of width direction grooves 13, the plurality of sipes 20 to 23 (division sipes 20, 21, central sipe 22, an adjacent sipe 23), and the plurality of blocks 31 that come into contact with the road surface. On both sides of the center line 32 of the first land portion 30 extending in the tire circumferential direction S, the plurality of width direction grooves 13 are arranged in parallel at intervals in the tire circumferential direction S. The center line 32 of the first land portion 30 is located at the center in the tire width direction H of the first land portion 30 and at the tire equatorial plane 3. One end of the width direction groove 13 opens at the first circumferential groove 10, and the other end of the width direction groove 13 closes in the first land portion 30.

The width direction groove 13 on one side of the center line 32 and the width direction groove 13 on the other side of the center line 32 are formed with being shifted in the tire circumferential direction S. The division sipes 20 and 21 are circumferential direction sipes extending along the tire circumferential direction S and are formed between the width direction groove 13 on one side of the center line 32 and the width direction groove 13 on the other side of the center line 32. Both ends of the division sipes 20 and 21 open at the width direction grooves 13, and the first land portion 30 is divided in the tire width direction H by the plurality of division sipes 20 and 21.

The block 31 of the first land portion 30 is a central block located in the central region of the tread portion 2. The plurality of blocks 31 are partitioned between the two first circumferential grooves 10 by the two first circumferential grooves 10, the plurality of width direction grooves 13, and the plurality of division sipes 20, 21, and are formed in the first land portion 30. On both sides of the center line 32, the plurality of blocks 31 are sequentially arranged in the tire circumferential direction S, and the width direction grooves 13 are formed between the blocks 31. The block 31 on one side of the center line 32 and the block 31 on the other side of the center line 32 are formed with being shifted in the tire circumferential direction S.

The block 31 has at least one central sipe 22 formed at a central portion (block central portion 33) of the block 31 in the tire circumferential direction S, and at least one adjacent sipe 23 adjacent to the central sipe 22. The central sipe 22 and the adjacent sipe 23 are width direction sipes extending along the tire width direction H, and are adjacent to each other in the tire circumferential direction S. Further, the central sipe 22 and the adjacent sipe 23 are formed on the block tread with being parallel at intervals in the tire circumferential direction S, and traverse the block 31 in the tire width direction H. It is noted that the block central portion 33 is not limited to the center position of the block 31 in the tire circumferential direction S, but is a central region extending in the tire width direction H of the block 31 including the center position in the tire circumferential direction S.

Here, the block 31 has the plurality of sipes 22 and 23 including one central sipe 22 (one central sipe 22, two adjacent sipes 23). Further, the pair of adjacent sipes 23 are adjacent to both sides of the central sipe 22 in the tire circumferential direction S, and the central sipe 22 is formed between the pair of adjacent sipes 23. One end of each of the plurality of sipes 22 and 23 is open at the first circumferential groove 10, and the other end of each of the plurality of sipes 22 and 23 is open at the division sipe 20. The block 31 is partitioned in the tire circumferential direction S by the plurality of sipes 22 and 23, and a plurality of partitioned blocks (small blocks) are formed in the block 31. Between the central sipe 22 and the adjacent sipe 23, a partitioned block (inter-sipe block) narrower than other partitioned blocks is formed.

The second land portion 40 is an intermediate land portion formed between the first circumferential groove 10 and the second circumferential groove 11 and is formed in an intermediate region of the tread portion 2 between the tire equatorial plane 3 and the shoulder portion 4. On both sides of the tire equatorial plane 3, the second land portion 40 is located between the first land portion 30 and the third land portion 50. Further, the second land portion 40 has a plurality of width direction grooves 14, a plurality of sipes 24 to 27 (division sipes 24 and 25, a central sipe 26, an adjacent sipe 27) and a plurality of blocks 41 which come into contact with the road surface. On both sides of the center line 42 of the second land portion 40 extending in the tire circumferential direction S, the plurality of width direction grooves 14 are arranged in parallel at intervals in the tire circumferential direction S. The center line 42 of the second land portion 40 is located at the center in the tire width direction H of the second land portion 40.

One end of the width direction groove 14 opens at the first circumferential groove 10 or the second circumferential groove 11, and the other end of the width direction groove 14 closes in the second land portion 40. The width direction groove 14 on one side of the center line 42 and the width direction groove 14 on the other side of the center line 42 are formed with being shifted in the tire circumferential direction S. The division sipes 24 and 25 are circumferential sipes extending along the tire circumferential direction S and are formed between the width direction groove 14 on one side of the center line 42 and the width direction groove 14 on the other side of the center line 42. Both ends of the division sipes 24, 25 are opened at the width direction grooves 14, and the second land portion 40 is divided in the tire width direction H by the plurality of division sipes 24, 25.

The block 41 of the second land portion 40 is an intermediate block located in an intermediate region of the tread portion 2. By the first circumferential groove 10, the second circumferential groove 11, the plurality of width direction grooves 14, and the plurality of division sipes 24 and 25, the plurality of blocks 41 are partitioned between the first circumferential groove 10 and the second circumferential groove 11 and are formed in the second land portion 40. On both sides of the center line 42, a plurality of blocks 41 are sequentially arranged in the tire circumferential direction S, and the width direction grooves 14 are formed between the blocks 41. The block 41 on one side of the center line 42 and the block 41 on the other side of the center line 42 are formed with being shifted in the tire circumferential direction S.

The block 41 has at least one central sipe 26 formed at a central portion (block central portion 43) of the block 41 in the tire circumferential direction S, and at least one adjacent sipe 27 adjacent to the central sipe 26. The central sipe 26 and the adjacent sipe 27 are width direction sipes extending along the tire width direction H, and are adjacent to each other in the tire circumferential direction S. Further, the central sipe 26 and the adjacent sipe 27 are formed on the block tread while they are arranged in parallel at intervals in the tire circumferential direction S, and cross the block 41 in the tire width direction H. It is noted that the block central portion 43 is not limited to the center position of the block 41 in the tire circumferential direction S, but is a central region extending in the tire width direction H of the block 41 and including the center position in the tire circumferential direction S.

Here, the block 41 has a plurality of sipes 26 and 27 including one central sipe 26 (one central sipe 26 and two adjacent sipes 27). A pair of adjacent sipes 27 are adjacent to both sides of the central sipe 26 in the tire circumferential direction S, and the central sipe 26 is formed between the pair of adjacent sipes 27. One end of each of the plurality of sipes 26 and 27 opens at the first circumferential groove 10 or the second circumferential groove 11, and the other end of each of the plurality of sipes 26 and 27 opens at the division sipe 24. The block 41 is partitioned in the tire circumferential direction S by the plurality of sipes 26 and 27, and a plurality of partitioned blocks (small blocks) are formed in the block 41. Between the central sipe 26 and the adjacent sipe 27, a partitioned block (inter-sipe block) narrower than other partitioned blocks is formed.

The third land portion 50 is an outer land portion formed outward in the tire width direction H of the second circumferential groove 11, and formed in an outer region (shoulder portion 4 side region) in the tire width direction H of the tread portion 2. On both sides of the tire equatorial plane 3, the third land portion 50 is located outward in the tire width direction H of the second land portion 40. In addition, the third land portion 50 has a plurality of width direction grooves 15 and a plurality of blocks 51 that come into contact with the road surface. The plurality of width direction grooves 15 are arranged in parallel at intervals in the tire circumferential direction S. One end of the width direction groove 15 opens at the second circumferential groove 11, and the other end of the width direction groove 15 opens at the side of the shoulder part 4.

The block 51 of the third land portion 50 is an outer block located in an outer region of the tread portion 2. The plurality of blocks 51 are partitioned, by the second circumferential groove 11 and the plurality of width direction grooves 15, outward in the tire width direction H of the second circumferential groove 11 and are formed at the third land portion 50. The plurality of blocks 51 are sequentially arranged in the tire circumferential direction S, and the width direction grooves 15 are formed between the blocks 51. It is noted that the block 51 has a narrow groove 52 narrower than the width direction groove 15, and a plurality of sipes 53. The narrow groove 52 and the sipe 53 are formed along the tire width direction H.

The block 31 of the first land portion 30 and the block 41 of the second land portion 40 are formed in the same manner and have the same characteristics with respect to each wall (side wall, end wall). Hereinafter, taking the block 31 of the first land portion 30 as an example, the block 31 will be described in detail. The block 41 of the second land portion 40 is the same as the block 31 of the first land portion 30 described below, and thus the description thereof is omitted.

Fig. 2 is a perspective view illustrating the block 31 of the present embodiment, and shows one block 31 as viewed from the outside in the tire radial direction K. Fig. 2 shows a portion on the first circumferential groove 10 side of the block 31, and omits a portion on the side of the division sipes 20 and 21 of the block 31.

As shown, the first circumferential groove 10 partitions the block 31 on the side of the block 31 in the tire width direction H, and the width direction groove 13 partitions the block 31 on both sides in the tire circumferential direction S of the block 31. The block 31 includes a tread (block tread 34) formed along the tire circumferential direction S, a side wall 35 positioned in the first circumferential groove 10, end walls 36 positioned in the width direction groove 13, and a plurality of edge portions 37A and 37B (the first edge portion 37A and the second edge portion 37B). The block tread 34 is an outer surface in the tire radial direction K of the block 31 and comes into contact with the road surface when the tire 1 rolls (when the vehicle is running). The side wall 35 and the end walls 36 are parts of the wall of the block 31 and are formed inward in the tire radial direction K from the edge portions 37A and 37B located at the edge of the block tread 34, respectively.

The side wall 35 of the block 31 is a side surface of the block 31, located on the side in the tire width direction H, and defines the first circumferential groove 10. The side wall 35 is also a groove wall of the first circumferential groove 10 and is formed from the groove bottom of the first circumferential groove 10 to the block tread 34. The central sipe 22 is formed along the tire width direction H on the block tread 34 of the block central portion 33 and opens at the side wall 35. The adjacent sipes 23 are formed on the block tread 34 in parallel with the central sipe 22, and are opened at the side wall 35 on both sides in the tire circumferential direction S of the central sipe 22. The side wall 35 and the end wall 36 intersect at a position where the first circumferential groove 10 and the width direction groove 13 intersect (a corner of the block 31).

The end wall 36 of the block 31 is an end surface of the block 31 located at an end of the block 31 in the tire circumferential direction S and defines the width direction groove 13. The end wall 36 is also a groove wall of the width direction groove 13 and is formed from the groove bottom of the width direction groove 13 to the block tread 34. The two end walls 36 are located at both ends in the tire circumferential direction S of the block 31 and are located at the width direction grooves 13 on both sides in the tire circumferential direction S of the block 31.

The side wall 35 of the block 31 is a circumferential wall extending along the tire circumferential direction S between the end walls 36 on both sides in the tire circumferential direction S. The end wall 36 of the block 31 is a width direction wall extending along the tire width direction H at both ends in the tire circumferential direction S of the block 31. The first edge portion 37A is a circumferential edge portion extending along the tire circumferential direction S and is formed at a position (edge) where the block tread 34 and the side wall 35 intersect. The second edge portion 37B is a width direction edge portion extending along the tire width direction H and is formed at a position (edge) where the block tread 34 and the end wall 36 intersect.

The first edge portion 37A is inclined toward the side (outside) of the block 31 in the tire width direction H with respect to the tire circumferential direction S when viewed from the end wall 36 toward the block central portion 33. As a result, the side wall 35 is formed in a convex shape in which the block central portion 33 protrudes and is inclined with respect to the tire circumferential direction S between the end wall 36 and the block central portion 33. An outer end 35A is formed at the side wall 35 in the block central portion 33. The outer end 35A is an outermost portion located on the outermost side in the tire width direction H within the side wall 35. The central sipe 22 is opened at the outer end 35A of the side wall 35, and the adjacent sipes 23 is opened at the side wall 35 on both sides of the outer end 35A in the tire circumferential direction S.

The side wall angle P of the block 31 changes between the block central portion 33 and the end wall 36, and the end wall angle Q of the block 31 is constant over the entire end wall 36. Here, the angle related to the block 31 is an angle (intersection angle) (a unit: °) in the tire 1 in a specified state where the tire is not in contact with the ground. The specified state is a state when the tire 1 is mounted on a specified rim, the tire 1 is filled with a specified internal pressure, and the tire 1 is unloaded, and is specified by a standard applied to the tire 1.

For example, in JATMA YEAR BOOK (Japan Automotive Tire Association Standard), the specified rim is a standard rim, and the specified internal pressure is an air pressure specified corresponding to the maximum load capacity. When another standard is applied at the place of use or the place of manufacture of the tire 1, the specified state of the tire 1 is defined according to each standard. Other standards are, for example, YEAR BOOK of TRA (The Tire and Rim Association Inc.) in the United States and STANDARDS MANUAL of ETRTO (The European Tire and Rim Technical Organization) in Europe.

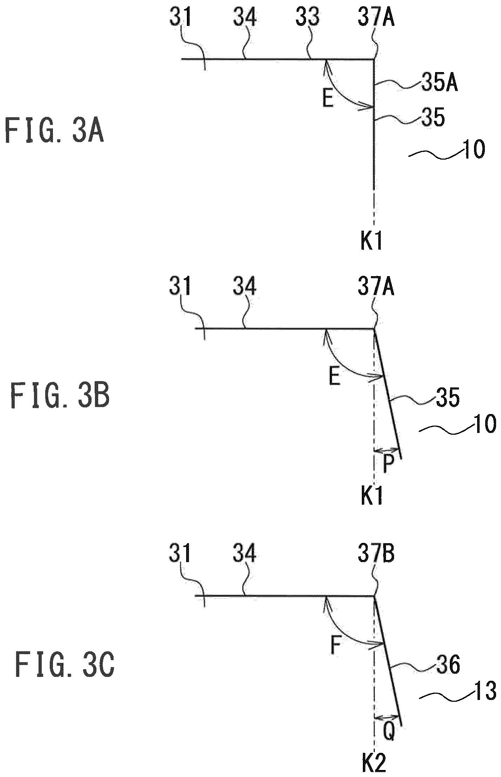

Fig. 3 is a sectional view of the block 31 of the present embodiment and shows a cross-section of each part of the block 31. Fig. 3A shows the side wall 35 of the block central portion 33 taken along the line X1-X1 in Fig. 2, and Fig. 3B shows the side wall 35 taken along the line X2-X2 in Fig. 2. Fig. 3C shows the end wall 36 of the block 31 taken along the line X3-X3 in Fig. 2.

As shown in Figs. 2 and 3, the angles P and Q are defined based on the tire radial surfaces including the tire radial direction K (the first tire radial surface K1 and the second tire radial surface K2). The first tire radial surface K1 is a reference surface of the side wall angle P passing through the first edge portion 37A between the block tread 34 and the side wall 35, and the side wall angle P of the block 31 is the angle formed by the first tire radial surface K1 and the side wall 35. The second tire radial surface K2 is a reference surface with an end wall angle Q passing through the second edge portion 37B between the block tread surface 34 and the end wall 36, and the end wall angle Q of the block 31 is the angle formed by the second tire radial surface K2 and the end wall 36.

The side wall 35 of the block 31 is formed along the tire radial direction K, or when viewed from the outside (the block tread 34 side) in the tire radial direction K toward the inside (the groove bottom side), it is inwardly inclined in the groove width direction of the first circumferential groove 10 (outside of the block 31) with respect to the tire radial direction K. Specifically, the side wall angle P of the block 31 increases from the block central portion 33 (see Fig. 3A) toward each of the end walls 36 (see Fig. 3B) on both sides in the tire circumferential direction S. Also, in the side wall 35 of the block 31, a minimum portion with the smallest side wall angle P is provided in the block central portion 33, and a maximum portion with the largest side wall angle P is provided at the circumferential end of the side wall 35. The circumferential end of the side wall 35 is the end of the side wall 35 in the tire circumferential direction S (the end on the end wall 36 side). The outer end 35A of the side wall 35 in the block central portion 33 is the minimum portion of the side wall angle P. Therefore, the side wall angle P of the block 31 is the smallest at the outer end 35A of the side wall 35 and gradually increases from the outer end 35A toward the end wall 36.

Here, the side wall angle P of the block 31 is not less than 0 degrees and not more than 12 degrees (0 ° ≦ P ≦ 12 °). The side wall angle P is 0 degree in the block central portion 33 (the outer end 35A that is the minimum portion) and 12 degrees at the circumferential end (maximum portion) of the side wall 35. In the portion where the side wall angle P is 0 degrees (see Fig. 3A), the side wall 35 is formed along the tire radial direction K. In the portion where the side wall angle P is larger than 0 degrees (see Fig. 3B), the side wall 35 is inclined inward in the width direction of the first circumferential groove 10 with respect to the tire radial direction K when viewed from the outside to the inside in the tire radial direction K. The side wall angles P of the block 31 are the same at the circumferential ends on both sides of the side wall 35 (here, 12 degrees).

The side wall angle P of the block 31 continuously increases from the block central portion 33 toward the end wall 36 (see Fig. 2). As a result, two wall surfaces 35B and 35C are formed on the side wall 35 of the block 31. The two wall surfaces 35B and 35C are formed at both sides of the outer end 35A in the tire circumferential direction S so that they are directed to different directions each other and are connected at the outer end 35A of the side wall 35. The angle E formed by the block tread 34 and the side wall 35 of the block 31 is 90 degrees or more (see Figs. 3A and 3B), and gradually increases from the block central portion 33 toward the end wall 36.

The end wall angle Q of the block 31 is the same as the side wall angle P of the block 31 at the circumferential end of the side wall 35, located on the side of end wall 36 (see Fig. 3C). Therefore, when viewed from the outside toward the inside in the tire radial direction K, the end wall 36 of the block 31 is inclined inward (outward the block 31) in the groove width direction of the width direction groove 13 with respect to the tire radial direction K. The end wall angle Q of the block 31 is larger than 0 degree and equal to or smaller than 12 degrees, and is 12 degrees here corresponding to the side wall angle P. The angle F formed by the block tread 34 and the end wall 36 of the block 31 is greater than 90 degrees, and is the same angle as the angle E formed by the block tread 34 and the side wall 35 at the circumferential end of the side wall 35.

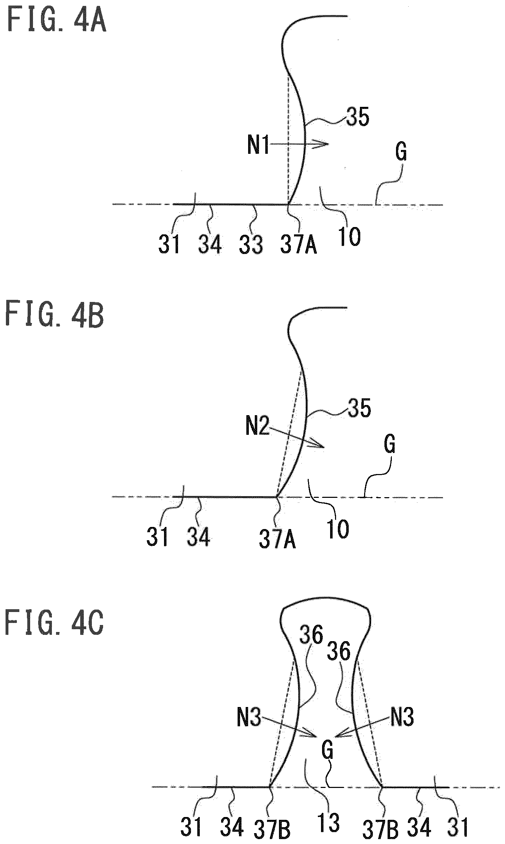

Fig. 4 is a sectional view showing a state where the block 31 of the present embodiment is in contact with the ground and shows a cross-section of each part of the block 31 when the tire 1 rolls (when the vehicle is travelling). In Fig. 4, the shape of the block 31 deformed by grounding is shown by a solid line, and the shape of the undeformed block 31 is shown by a broken line. Fig. 4A shows the side wall 35 of the block central portion 33 corresponding to Fig. 3A, and Fig. 4B shows the side wall 35 corresponding to Fig. 3B. Fig. 4A and Fig. 4B show a part of the first circumferential groove 10 located between the first land portion 30 and the second land portion 40 (see Fig. 1). Fig. 4C shows the end wall 36 of the block 31 corresponding to Fig. 3C. Fig. 4C shows the end walls 36 located on both sides of the width direction groove 13.

As shown, when the vehicle is travelling, the block tread 34 of the block 31 comes into contact with the road surface G (the ice road surface) while the tire 1 rotates. The block tread 34 is thereby pressed against the road surface G, and the block 31 is deformed. In the block central portion 33 (see Fig. 4A), since the side wall angle P of the block 31 is relatively small, the side wall 35 of the block 31 is deformed so that it protrudes along the road surface G (see arrow N1). On the other hand, as the side wall angle P of the block 31 increases (see Fig. 4B), the direction in which the side wall 35 protrudes is inclined toward the road surface G, and the side wall 35 of the block 31 is deformed so that it protrudes toward the road surface G (see arrow N2). At the end wall 36 (see Fig. 4C), the direction in which the end wall 36 protrudes is inclined toward the road surface G, and the end wall 36 of the block 31 is deformed so that it protrudes toward the road surface G (see arrow N3).

As a result, at the first edge portion 37A (and its peripheral portion) on the side of side wall 35 of the block 31, a grounding pressure increases from the block central portion 33 toward the end wall 36. Along with this, at the first edge portion 37A of the block central portion 33 and at the ends of the sipes 22 and 23, the grounding pressure is suppressed from increasing, so that the concentration of the grounding pressure may be avoided, thus the occurrence of the tipping of the block 31 is suppressed. Further, the side wall 35 of the block central portion 33 is not necessary to be recessed, the grounding area in the block central portion 33, the length of the central sipe 22, and the edge component of the central sipe 22 in the tire width direction H are secured. At the second edge portion 37B on the side of end wall 36 of the block 31, since the grounding pressure increases, water is suppressed from entering toward the block central portion 33.

Therefore, in the tire 1 of the present embodiment, the on-ice performance of the tire 1 can be improved while the tipping of the block 31 is suppressed. In addition, both of the tipping resistance performance of the block 31 and the on-ice performance of the tire 1 can be improved and established. When the side wall angle P of the block 31 increases from the outer end 35A of the block central portion 33 toward the end wall 36, the concentration of the ground pressure at the outer end 35A is avoided, and the tipping of the block 31 is able to be suppressed more reliably. By forming the plurality of sipes 22 and 23 in the block 31, the on-ice performance of the block 31 can be further improved.

The side wall angle P of the block 31 continuously increases from the block central portion 33 toward the end wall 36. As a result, the grounding pressure continuously changes in the first edge portion 37A of the block 31, so that the ground pressure is easily dispersed. When the end wall angle Q of the block 31 is the same as the side wall angle P of the block 31 at the circumferential end of the side wall 35, the grounding pressure of the second edge portion 37B of the block 31 increase in a similar way throughout the second edge portion 37B, so that water can be suppressed from entering toward the block central portion 33 more reliably.

Where the side wall 35 of the block 31 is inclined outward in the groove width direction of the first circumferential groove 10 (inside of the block 31) with respect to the tire radial direction K when viewed from the outside in the tire radial direction K to the inside, it is assumed that the side wall angle P of the block 31 is smaller than 0 degree. In this case, an increase of shear deformation of the block 31 at the first edge portion 37A is likely to affect the tipping resistance performance of the block 31. If the side wall angle P of the block 31 is larger than 12 degrees, the shape of the first circumferential groove 10 including the shape of the groove bottom is likely to be affected. For this reason, it is preferable that the side wall angle P of the block 31 is not less than 0 degrees and not more than 12 degrees. In this case, it is possible to more reliably suppress the tipping of the block 31 while avoiding affecting the shape of the first circumferential groove 10.

It is noted that the side wall angle P of the block central portion 33 may be larger than 0 degrees. Further, the side wall angle P of the block 31 may be continuously increased, or the side wall angle P of the block 31 may be discontinuously increased.

The side wall 35 of the present embodiment may be applied as one side wall of the block 31 in the tire width direction H, or may be applied as both side walls of the block 31 in the tire width direction H. A block similar to the block 31 may be provided on one land portion of the tread portion 2 or may be provided on a plurality of land portions of the tread portion 2. The block 31 of the present embodiment can be applied in various tread patterns including blocks.

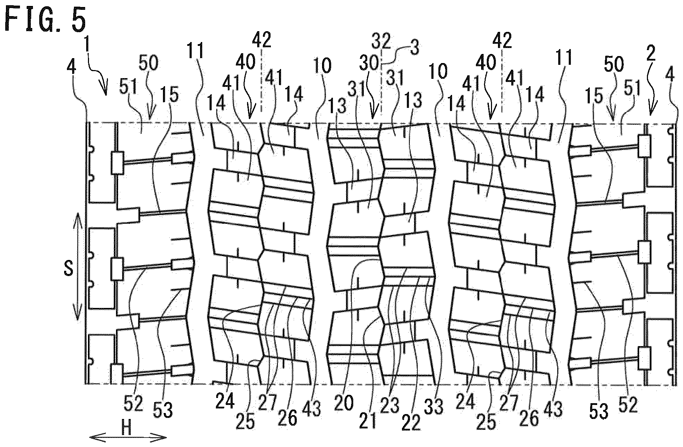

FIG. 5 is a plan view showing a tread pattern of a tire 1 of another embodiment, and schematically shows a part in a tire circumferential direction S of a tread portion 2.

Here, the width direction groove 15 of the third land portion 50 is different from the width direction groove 15 of the third land portion 50 shown in Fig. 1. The width direction groove 15 is a narrow groove similar to the narrow groove 52 of the block 51 and is narrower than the circumferential grooves 10 and 11 and the other width direction grooves 13 and 14.

### Reference Signs List

- 1: tire
- 2: tread portion
- 3: tire equatorial plane
- 4: shoulder portion
- 10: first circumferential groove
- 11: second circumferential groove
- 13: width direction groove
- 14: width direction groove
- 15: width direction groove
- 20: division sipe
- 21: division sipe
- 22: central sipe
- 23: adjacent sipe
- 24: division sipe
- 25: division sipe
- 26: central sipe
- 27: adjacent sipe
- 30: first land portion
- 31: block
- 32: center line
- 33: block central portion
- 34: block tread
- 35: side wall
- 36: end wall
- 40: second land portion
- 41: block
- 42: center line
- 43: block central portion
- 50: third land portion
- 51: block
- 52: narrow groove
- 53: sipe
- G: road surface
- H: tire width direction
- K: tire radial direction
- R: tire rotating direction
- P: side wall angle
- Q: end wall angle
- S: tire circumferential direction

## Claims

1. A tire (1) comprising a block (31) in a tread portion (2); wherein
the block (31) has a side wall (35) extending along a tire circumferential direction (S) between end walls (36) on both sides in the tire circumferential direction (S), and a central sipe (22, 26) formed along a tire width direction (H) on a block tread (34) of a block central portion (33) in the tire circumferential direction (S) and opening at the side wall (35),
a side wall angle (P) formed by a tire radial surface (K1, K2) and the side wall (35) of the block (31) increases from the block central portion (33) toward each of the end walls (36) on both sides in the tire circumferential direction (S), and
an end wall angle (Q) formed by the tire radial surface (K1, K2) and the end wall (36) of the block (31) is the same as the side wall angle (P) of the block (31) at a circumferential end of the side wall (35),
wherein a first tire radial surface (K1) is a reference surface of the side wall angle (P) passing through a first edge portion (37A) between the block tread (34) and the side wall (35), and the side wall angle (P) of the block (31) is the angle formed by the first tire radial surface (K1) and the side wall (35), and
a second tire radial surface (K2) is a reference surface with an end wall angle (Q) passing through a second edge portion (37B) between the block tread surface (34) and the end wall (36), and the end wall angle (Q) of the block (31) is the angle formed by the second tire radial surface (K2) and the end wall (36), **characterised in that**
the end wall angle (Q) is constant over the entire end wall (36).

2. The tire (1) according to claim 1, wherein
the side wall angle (P) of the block (31) is not less than 0 degree and not more than 12 degrees.

3. The tire (1) according to claim 1 or 2, further comprising
an outer end located on the outermost side in the tire width direction (H) being formed at the side wall (35) in the block central portion (33), and wherein
the side wall angle (P) increases from the outer end toward the end wall (36).

4. The tire (1) according to claim 3, wherein
the block (31) has a plurality of sipes (20 to 27) including one central sipe opening at the outer end.

5. The tire (1) according to any of claims 1 to 4, wherein
the side wall angle (P) of the block (31) increases continuously from the block central portion (33) toward the end wall (36).

## Patentansprüche

1. Reifen (1), der einen Block (31) in einem Laufflächenabschnitt (2) umfasst, wobei
der Block (31) eine Seitenwand (35), die sich entlang einer Reifenumfangsrichtung (S) zwischen Stirnwänden (36) auf beiden Seiten in der Reifenumfangsrichtung (S) erstreckt, und eine Mittellamelle (22, 26), die entlang einer Reifenbreitenrichtung (H) auf einer Block-Lauffläche (34) eines Block-Mittelabschnitts (33) in der Reifenumfangsrichtung (S) geformt ist und sich an der Seitenwand (35) öffnet, aufweist,
ein Seitenwandwinkel (P), der durch eine Reifenradialfläche (K1, K2) und die Seitenwand (35) des Blocks (31) gebildet wird, von dem Block-Mittelabschnitt (33) hin zu jeder der Stirnwände (36) auf beiden Seiten in der Reifenumfangsrichtung (S) zunimmt, und
ein Stirnwandwinkel (Q), der durch die Reifenradialfläche (K1, K2) und die Stirnwand (36) des Blocks (31) gebildet wird, der gleiche ist wie der Seitenwandwinkel (P) des Blocks (31) an einem Umfangsende der Seitenwand (35),
wobei eine erste Reifenradialfläche (K1) eine Referenzfläche des Seitenwandwinkels (P) ist, die durch einen ersten Kantenabschnitt (37A) zwischen der Block-Lauffläche (34) und der Seitenwand (35) hindurchgeht, und der Seitenwandwinkel (P) des Blocks (31) der Winkel ist, der durch die erste Reifenradialfläche (K1) und die Seitenwand (35) gebildet wird, und
eine zweite Reifenradialfläche (K2) eine Referenzfläche mit einem Stirnwandwinkel (Q) ist, die durch einen zweiten Kantenabschnitt (37B) zwischen der Block-Lauffläche (34) und der Stirnwand (36) hindurchgeht, und der Stirnwandwinkel (Q) des Blocks (31) der Winkel ist, der durch die zweite Reifenradialfläche (K2) und die Stirnwand (36) gebildet wird, **dadurch gekennzeichnet, dass** der Stirnwandwinkel (Q) über die gesamte Stirnwand (36) konstant ist.

2. Reifen (1) nach Anspruch 1, wobei
der Seitenwandwinkel (P) des Blocks (31) nicht weniger als 0 Grad und nicht mehr als 12 Grad beträgt.

3. Reifen (1) nach Anspruch 1 oder 2, der ferner Folgendes umfasst:
ein äußeres Ende, das auf der in der Reifenbreitenrichtung (H) äußersten Seite angeordnet ist, an der Seitenwand (35) in dem Block-Mittelabschnitt (33) geformt ist und wobei
der Seitenwandwinkel (P) von dem äußeren Ende hin zu der Stirnwand (36) zunimmt.

4. Reifen (1) nach Anspruch 3, wobei
der Block (31) eine Vielzahl von Lamellen (20 bis 27) aufweist, einschließlich einer Mittellamelle, die sich an dem äußeren Ende öffnet.

5. Reifen (1) nach einem der Ansprüche 1 bis 4, wobei
der Seitenwandwinkel (P) des Blocks (31) kontinuierlich von dem Block-Mittelabschnitt (33) hin zu der Stirnwand (36) zunimmt.

## Revendications

1. Bandage pneumatique (1), comprenant un pavé (31) dans une partie de bande de roulement (2) ; dans lequel :
le pavé (31) a une paroi latérale (35) s'étendant le long d'une direction circonférentielle du bandage pneumatique (S) entre des parois d'extrémité (36) sur les deux côtés dans la direction circonférentielle du bandage pneumatique (S), et une lamelle centrale (22, 26) formée le long d'une direction de la largeur du bandage pneumatique (H) sur une bande de roulement à pavés (34) d'une partie centrale du pavé (33), dans la direction circonférentielle du bandage pneumatique (S) et s'ouvrant au niveau de la paroi latérale (35) ;
un angle de la paroi latérale (P) formé par une surface radiale du bandage pneumatique (K1, K2) et la paroi latérale (35) du pavé (31) est accru de la partie centrale du pavé (33) vers chacune des parois d'extrémité (36) sur les deux côtés dans la direction circonférentielle du bandage pneumatique (S) ; et
un angle de la paroi d'extrémité (Q) formé par la surface radiale du bandage pneumatique (K1, K2) et la paroi d'extrémité (36) du pavé (31) est identique à l'angle de la paroi latérale (P) du pavé (31) au niveau d'une extrémité circonférentielle de la paroi latérale (35) ;
dans lequel une première surface radiale du bandage pneumatique (K1) est une surface de référence de l'angle de la paroi latérale (P), passant à travers une première partie de bordure (37A) entre la bande de roulement à pavés (34) et la paroi latérale (35), et l'angle de la paroi latérale (P) du pavé (31) est l'angle formé par la première surface radiale du bandage pneumatique (K1) et la paroi latérale (35) ; et
une deuxième surface radiale du bandage pneumatique (K2) est une surface de référence avec un angle de la paroi d'extrémité (Q) passant à travers une deuxième partie de bordure (37B) , entre la surface de la bande de roulement à pavés (34) et la paroi d'extrémité (36), et l'angle de la paroi d'extrémité (Q) du pavé (31) est l'angle formé par la deuxième surface radiale du bandage pneumatique (K2) et la paroi d'extrémité (36), **caractérisé en ce que** l'angle de la paroi d'extrémité (Q) est constant sur l'ensemble de la paroi d'extrémité (36).

2. Bandage pneumatique (1) selon la revendication 1, dans lequel :
l'angle de la paroi latérale (P) du pavé (31) n'est pas inférieur à 0 degré et pas supérieur à 12 degrés.

3. Bandage pneumatique (1) selon la revendication 1 ou 2, comprenant en outre :
une extrémité externe disposée sur le côté externe extrême, dans la direction de la largeur du bandage pneumatique (H), formée au niveau de la paroi latérale (35) dans la partie centrale du pavé (33), et dans lequel :
l'angle de la paroi latérale (P) est accru de l'extrémité externe vers la paroi d'extrémité (36).

4. Bandage pneumatique (1) selon la revendication 3, dans lequel :
le pavé (31) a une pluralité de lamelles (20 à 27) incluant une lamelle centrale s'ouvrant au niveau de l'extrémité externe.

5. Bandage pneumatique (1) selon l'une quelconque des revendications 1 à 4, dans lequel :
l'angle de la paroi latérale (P) du pavé (31) est accru de manière continue de la partie centrale du pavé (33) vers la paroi d'extrémité (36).
